# EUROPEAN PATENT SPECIFICATION

(11) **EP 1 766 215 B1**
(45) Date of publication and mention of the grant of the patent: **22.04.2015**
(21) Application number: 05748776.1
(22) Date of filing: 17.06.2005
(51) Int. Cl.: F02D 41/14, F02D 35/02, F02D 41/38, F02D 41/40

(54) **VIBRATION REDUCTION IN LARGE DIESEL ENGINES**
SCHWINGUNGSVERRINGERUNG IN GROSSEN DIESELMOTOREN
REDUCTION DE VIBRATIONS DANS DE GROS MOTEURS DIESEL

(30) Priority: 17.06.2004 WO PCT/DK2004/000419
(43) Date of publication of application: 28.03.2007
(73) Proprietor: MAN Diesel & Turbo, filial af MAN Diesel & Turbo SE, Tyskland, 2450 Copenhagen SV (DK)
(72) Inventor: JENSEN, Kim, DK-2635 Ishøj (DK); RØNNEDAL, Per, DK-4000 Roskilde (DK); PREEM, Michael, 2000 Frederiksberg (DK)
(74) Representative: Zacco Denmark A/S
(86) International application number: PCT/DK2005/000399
(87) International publication number: WO 2005/124132

(56) References cited:
- EP-A- 0 254 005
- EP-A- 0 447 697
- EP-A- 1 128 050
- WO-A-94/29585
- US-A- 5 353 764
- US-A- 5 831 263

## Description

### Field of the invention

The invention relates to the operation of large piston engines of the crosshead type, in particular two-stroke engines.

### Background of the invention

Large piston engines of the crosshead type are used e.g. for propelling ocean-going ships. In such engines it is of great importance to optimise each of the many processes in the engine to obtain optimal overall operating conditions and performance data of the engine. Optimal operating conditions for the engine may vary with local or national requirements or may depend on criteria defined by the owner or the operator of the ship. National requirements can aim at protecting the local environment and can set limits to the emission of harmful and noxious substances from the engine, in particular NOx and particles. Such mode of operation may not be the most economical mode with regard to fuel consumption. Outside national jurisdictions with no or less stringent restrictions on emissions the owner or operator of the ship may wish to run the engine in a mode with emphasis on low fuel consumption and/or mechanical load or vibratory stress level on the engine and its components or in a component of an installation excited by the engine.

Vibratory stress level can be measured directly or indirectly, or it can be estimated or calculated using mathematical models of the engine and its associated structures. For each individual engine including one or more installations driven or excited by the engine vibratory stress in one or more components levels can be calculated in dependence on e.g. engine speed and different sets of operating parameters that together define modes of operation of the engine as mentioned above. Calculated vibratory stress levels can be compared to predetermined limits, and if a limit is exceeded, appropriate action can be taken.

Vibratory stress level includes stress levels induced by longitudinal and transversal (or shear) vibrations and torsional vibrations. Excessive vibratory stress level in a component may damage the component and may eventually lead to a breakdown of the component with fatal consequences to the engine and/or to the entire installation. For that reason it is important to keep the vibratory stress levels below safety limits.

Electronic control of two-stoke low-speed diesel engines enables fully integrated control of starting air valves, start and reversing sequence, governor function, auxiliary blowers, Electronically Profiled Injection (EPIC), fuel injection, exhaust valve actuation etc. In such engines the engine camshaft is replaced with hydraulic driven pumps that are activated by the engine control system. The angular position of the crankshaft is monitored by the engine control system by a pickup system.

Such engines can have two performance modes referred to as emission mode and economy mode. Economy mode is a fuel-optimised mode that economizes the engine fuel consumption for all engine loads. The emission mode is optimised to reduce the emission of NOx according to IMO or local rules. As the two modes have different performance characteristics at same engine load a different influence of vibration in the shaft system can be observed.

In a ship vibrations from the engine are not restricted to the engine itself and the propeller shaft, but vibrations are also transmitted to other parts of the hull, where the vibrations can be perceived as such, or the vibrations can generate audible noise, which may create discomfort to the crew and/or the passengers. For that reason it is desirable to keep the vibratory stress levels below comfort limits.

Torsional vibrations in the main shaft of the engine, including the propeller shaft, are composed of several frequencies including harmonics of the engine speed. Torsional vibrations in the main shaft of the engine will have frequencies related to the rotational speed of the engine. Typically, in an engine with k cylinders the k'th harmonic of the engine speed and multiples and possibly sub-multiples thereof will be present in the frequency spectrum, and each frequency will cause corresponding torsional vibrations in the main shaft of the engine. Torsional vibrations at some frequencies will be more significant than at other frequencies, and it is desirable to keep the total vibration level below predefined limits, but also to keep the vibration level at selected (or all) frequencies below predefined limits that can be individual to each frequency.

WO 94/29585 discloses a method for controlling torsional stress in the main shaft of a large diesel engine. The exhaust valves of one or more cylinders are kept open during the compression stroke, and the remaining cylinders are controlled to increase their power to compensate for the reduction in power.

EP 447 697 discloses a method where the timing and duration of fuel injection can be varied to suppress torsional vibration.

EP 1 128 050 discloses a method whereby knocking in a diesel engine can be reduced via pilot fuel injection. EP 1 128 050 further discloses a method based on frequency analysis whereby the effectiveness of the pilot fuel injection can be measured with high signal to noise ratio.

### Summary of the invention

The method of the invention uses a mathematical model of the engine, which establishes a relationship between the fuel injection and the resulting instantaneous cylinder pressure. Based on the mathematical model it is possible to control in particular the initial phase of the fuel injection by controlling the opening of the fuel injection valve or valves, whereby it is possible to control the frequency spectrum of the cylinder pressure to be within predefined limits and in particular to reduce vibrations at predetermined frequencies. In par - ticular the method comprises controlling the fuel injection system to initiate fuel injection by gradually increasing the fuel injection rate.

The invention thus provides a vibration-optimised method in which the operation of the engine is optimised to control not only the total vibration level but also the vibration level at individual frequencies of the vibration spectrum. The method comprises controlling the fuel injection system and/or the exhaust system to control the cylinder pressure at predetermined frequencies. The pressure can be calculated or measured, and a frequency analysis such as an FFT analysis can be performed to determine the pressure component at each frequency. The mathematical model is used to determine the resulting vibration at each frequency.

In the vibration-optimised method of operation, VIB method, characteristic features are lower compression pressure and lower maximum pressure and a smoother pressure curve. The VIB method has significant vibration advantages compared to the traditional economy and emission modes. Higher order excitation may be reduced by initiating the fuel injection before TDC or preferably by shaping the injection profile accordingly. For specific excitation orders, e.g. in the range 5-10, the excitation level is reduced considerably relative to the economy mode independent of the engine mean indicated pressure. Further advantages can be gained by forcing the heat release to be as long as possible. This can be performed by a series of discrete pilot injections or reduction of the injection pump hydraulic pressure. This results in a cylinder pressure diagram with low level of excitation orders 1-20 in nearly the full load range.

Heavy and costly vibration dampers can be saved, and barred speed intervals of the engine can be narrowed or even avoided so that the engine can be operated freely at all speeds.

### Brief description of the drawings

Figure 1 shows schematically a ship with a conventionally installed engine that can be operated in accordance with the invention;
Figure 2 shows typical vibratory stress levels in two modes of operation of the engine in figure 1, as a function of engine speed;
Figure 3 shows schematically a large two-stroke diesel engine of the crosshead type;
Figure 4 shows schematically the pressure in a cylinder of the engine in figure 3 through one cycle of operation; and
Figures 5 - 8 illustrate embodiments of the method of fuel injection according to the invention.

### Detailed description of the invention

The invention will be described with reference to an embodiment of the invention, in which a large piston engine of the crosshead type, in particular a two-stroke engine, is installed in a ship that is propelled by the engine. Other uses of the invention are possible.

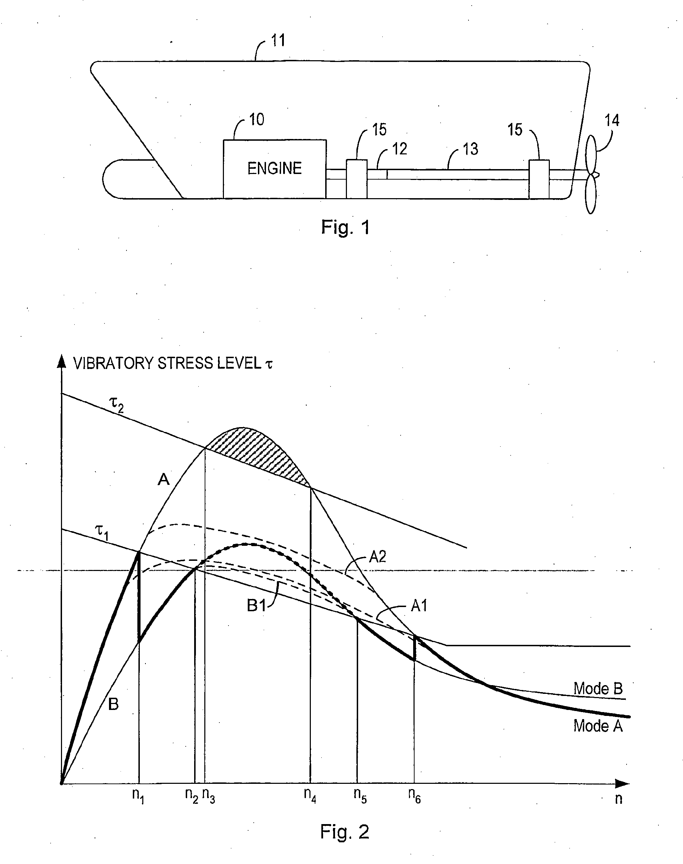

In figure 1 a large piston engine 10 of the crosshead type, in particular a two-stroke engine, is installed in a ship 11 that is only shown schematically. The engine 10 has an engine output shaft 12 that drives a load such as a propeller 14 that is driven via a propeller shaft 13, and/or an electric power generator depending on the need. The output shaft 12 and the propeller shaft 13 are supported by shaft bearings 15. The engine 10 is preferably an electronically controlled engine where several of its operating parameters can be controlled electronically.

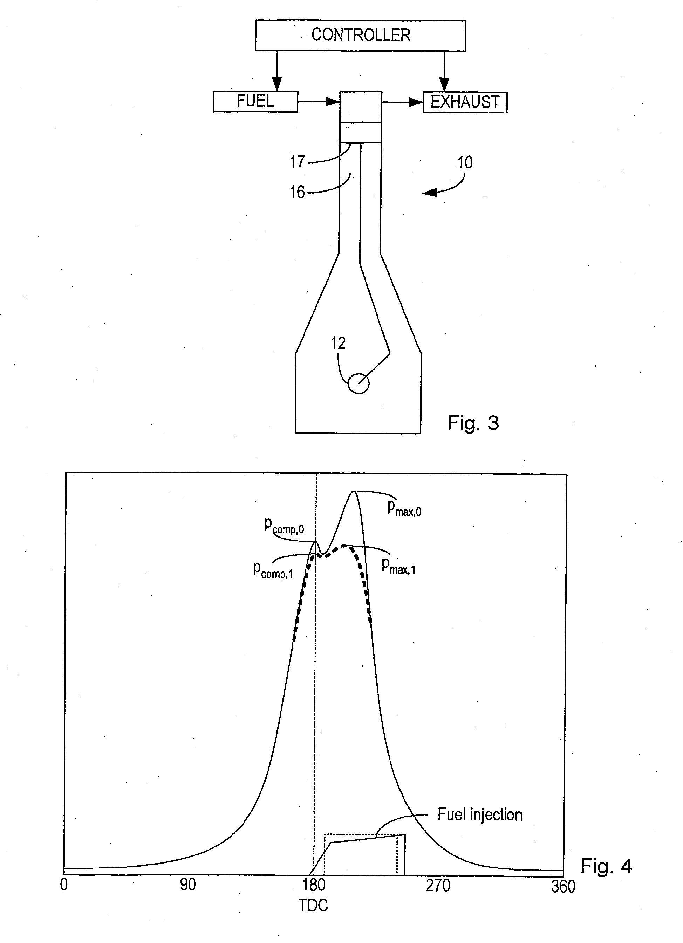

In figure 3 is shown the engine 10 with the main shaft or output shaft 12, and a cylinder 16 with a piston 17 driving the main shaft 12. A fuel system comprises a fuel pump, a fuel dosing system with one or more controllable fuel valves and one or more fuel injection nozzles, none of which are shown in detail. An exhaust system comprises in particular a controllable exhaust valve, which is also not shown in detail. A controller controls the fuel system and the exhaust system and other processes in the engine.

In figure 2 is shown the vibratory stress level τ in a particular engine component or in a component of an installation vibrationally excited by the engine, as a function of engine speed n, e.g. measured in revolutions per minute. The engine has two (or more) modes of operation, A and B, each optimised for achieving a particular performance over a range of engine speeds n, e.g. optimised to keep emissions below prescribed limits or optimised to give best fuel economy. As illustrated in figure 2 the two modes of operation A and B result in different vibratory stress levels. The vibratory stress levels of modes A and B both increase with engine speed; both have a maximum and decrease at higher engine speeds. At low and medium engine speeds the vibratory stress level of mode A is higher than that of mode B, whereas at higher speeds mode B results in vibratory stress level higher than that of mode A.

Figure 2 also shows two vibratory stress level limit curves τ₁ and τ₂, for the same component. The curves τ₁ and τ₂ both decrease with engine speed n. Vibratory stress levels τ ≤ τ₁ are allowed for continuous operation of the engine. Vibratory stress levels τ in the interval τ₁ < τ ≤ τ₂ are considered to be potentially harmful to the component for extended periods of operation, and vibratory stress levels in this interval are therefore allowed only for short term operation of the engine, e.g. when changing the engine speed. Vibratory stress levels τ > τ₂ are never allowed, not even for short term operation of the engine, since such stress levels are considered to be harmful to the component.

Figure 2 illustrates that if the engine is operated in mode B, there will be an interval of engine speeds n₂ < n < n₅, where the vibratory stress level τ is in the interval τ₁ < τ ≤ τ₂. The engine should therefore be operated in mode B in the engine speed interval n₂ < n < n₅ only for shorter periods. At engine speeds n < n₂ and n > n₅ the engine can be operated continuously in mode B. The engine can thus be operated continuously in mode B, provided that the engine speed interval n₂ < n < n₅ is only used for shorter periods such as for changing the engine speed between the safe intervals n < n₂ and n > n₅.

Figure 2 also illustrates that if the engine is operated in mode A, there will be an interval of engine speeds n₃ < n < n₄, where the vibratory stress level τ exceeds the limit τ₂, shown as a hatched area, and operation of the engine in mode A must therefore be prevented in the engine speed interval n₃ < n < n₄. In the engine speed intervals n₁ < n ≤ n₃ and n₄ ≤ n < n₆ the vibratory stress levels τ is in the interval τ₁ < τ ≤ τ₂ which is considered to be potentially harmful for extended periods of operation, and the engine should be operated in mode A in any of the two engine speed intervals n₁ < n ≤ n₃ and n₄ ≤ n < n₆ only for shorter periods. At engine speeds n < n₁ and n > n₆ the engine can be operated continuously in mode A. Due to the "forbidden" mode A engine speed interval n₃ < n < n₄ it is clear that when operating the engine in either of the "safe" engine speed intervals n < n₁ and n > n₆, the engine speed cannot be changed between these intervals with the engine still operating in mode A.

Figure 2 illustrates a preferred operation of the engine. The engine is operating in mode A in the engine speed interval n < n₁, and it is desired to increase the engine speed to the interval n > n₆. At the engine speed n₁ it is determined (e.g. by measurement or estimation) that the stress level limit τ₁ is reached, and the engine is shifted to operate in mode B, whereby the stress level drops correspondingly. The engine is then operated in mode B until it is determined (e.g. by measurement or estimation) that it will be safe to change back to operate the engine in mode A, i.e. in the entire engine speed interval n₁ < n < n₆. This is done by comparing the actually determined stress level in the component to the calculated hypothetical vibratory stress level (τ) that would exist in the engine component or in the component of the installation excited by the engine, if the engine were operated in the first mode of operation (A). It is seen that the stress level limit τ₁ is exceeded in the speed interval n₂ < n < n₅ as illustrated by the dotted part of the curve, but the upper stress level limit τ₂ is never exceeded.

In general, at each engine speed n the vibratory stress level τ in one or more engine components, or in one or more components of the installation excited by the engine, is determined and compared to one or both of the predetermined vibratory stress level limits τ₁ and τ₂. If the upper stress level limit τ₂ is exceeded, it is immediately decided to change one or more operating parameters or to change to mode B, to immediately reduce the vibratory stress level τ. If only the lower stress level limit τ₂ is exceeded, it may be decided to change one or more operating parameters or to change to mode B, or it may be decided to let the engine continue to operate in mode A, whereby the vibratory stress level τ will be in the potentially harmful stress level interval τ₁ < τ ≤ τ₂, but only for a limited period.

When increasing the engine speed n from the speed interval n < n₁, changing from mode A to mode B will preferably be performed at or about the engine speed n₁, where the vibratory stress level curve for mode A crosses the vibratory stress level limit τ₁, or at an engine speed not exceeding n₃. Correspondingly, changing from mode B back to mode A will preferably be performed at or about the engine speed n₆, or at an engine speed higher than n₄. Corresponding considerations apply when decreasing the engine speed from the speed interval n > n₆ to the speed interval n < n₁.

Changing between modes A and B results in abrupt changes in vibratory stress level τ, which may cause undesired distribution of power and forces between the engine components, in particular the crankshaft. Further, the corresponding abrupt changes in vibrations may possibly be perceived as discomforting by crew members and passengers, and for the period until the engine can again be operated in the mode A, the engine is not operating under preferred conditions. This can be remedied as follows.

Instead of changing between the fixed modes A and B it is preferred to modify one or more operating parameters of the selected mode of operation with a view to reducing the vibratory stress level. This has the advantage of avoiding the abrupt changes in vibratory stress level associated with changing between the fixed modes A and B, and in addition the engine can be operated at conditions closer to the preferred mode, which in the chosen example is mode A.

Figure 2 shows two examples of a modified mode A, i.e. A1 and A2. In both cases mode A has been modified in the engine speed interval from about n₁ to about n₆. The two modified modes A1 and A2 both have a continuous vibratory stress level, both are below the upper vibratory stress level limit τ₂, and A2 is closer to the unmodified mode A. Alternatively, the τ₁ curve can be followed in the entire interval n₁ < n < n₆, whereby continuous operation is acceptable.

If desired, mode B can also be modified as illustrated by the dotted curve B1 in the engine speed interval from about n₂ to about n₅. Hereby the vibratory stress level in mode B is kept closer to the lower vibratory stress level limit τ₁. Alternatively, the τ₁ curve can be followed in the interval n₂ < n < n₅, whereby continuous operation is acceptable.

The modifications to the modes of operation, A1, A2 and B1, can be saved as further selectable modes of operation in addition to the modes A and B.

In figure 4 the solid curve illustrates schematically the pressure in a cylinder of a large two-stroke diesel engine through one cycle of operation, i.e. 360 degrees. The pressure can be calculated based on a mathematical model of the engine, or it can be measured using suitable pressure transducers, and in both cases a frequency analysis such as an FFT analysis can be performed to determine the pressure component at each frequency. The mathematical model can then be used to determine the resulting vibration at each frequency.

The top dead centre TDC is at 180 degrees, where the compression pressure reaches its maximum p_{comp,0} and decreases immediately after the TDC. Shortly after the TDC fuel is injected into the cylinder. Due to the pressure and temperature in the cylinder the injected fuel ignites, which causes the pressure to rise to a maximum pressure p_{max,0} after the TDC.

The pressure in the cylinder exerts a force on the piston proportional to the pressure. Any variation in the pressure will therefore result in a corresponding variation in force on the piston. Frequencies in the cylinder pressure will result in torsional vibrations at the same frequencies. In other words, the frequency spectrum in the pressure will be reflected in the frequency spectrum of the torsional vibrations in the main shaft properly modified by the mechanical components of the system.

Traditionally the fuel is injected using an on/off valve as indicated by the dotted line, which causes a relatively rapid increase in pressure. The solid pressure curve in figure 4 is an example of the cylinder pressure variation using traditional control of the fuel injection valve. The two peaks p_{comp,0} and p_{max,0} and the valley between them have sharp curvatures which result in high-frequency content in the pressure, which in turn result in corresponding high-frequency content in the torsional shaft-vibrations.

The dashed curve in figure 4 shows a pressure curve in which the compression pressure p_{comp,1} and the maximum pressure p_{max,1} and the valley between them have been smoothed using the method of the invention. The smoothed (dashed) pressure curve has two features which each reduce vibrations. As a first feature, the maximum pressure is reduced, which in itself reduces the forces on the piston and hence also the vibrations. As a second feature, the pressure curve is smoothed, whereby the high-frequency content in the pressure is significantly reduced compared to the solid pressure curve. If desired, a smooth pressure curve can also be achieved while maintaining the maximum pressure. This is all achieved using the following method of the invention.

The engine in figure 1 has fuel injection valves that can be controlled to vary the injection pressure either continuously or in steps and not just on/off. A continuously (or quasi-continuously) variable valve can be controlled to gradually open and close to shape the fuel injection pressure and hence the fuel injection rate. The mathematical model of the engine is used to determine the instantaneous cylinder pressure as a function of e.g. the injected fuel. By proper control of the fuel injection, and in particular the initial phase thereof, a smoother pressure curve with reduced maximum pressure and less high-frequency content can be achieved. In particular it is thereby possible to control the frequency content of the cylinder pressure, and predetermined frequencies can be suppressed.

Traditionally, fuel injection is initiated 0 - 5 degrees after the TDC, whereby excessive maximum pressures are avoided. With the method of the invention fuel injection can advantageously be initiated earlier and even before the TDC with a gradual opening of the injection valve, and the pressure drop and the valley immediately after the TDC can be smoothed. Also the maximum pressure with the sharp peak can be smoothed. A typical result is shown in the dashed curve in figure 4.

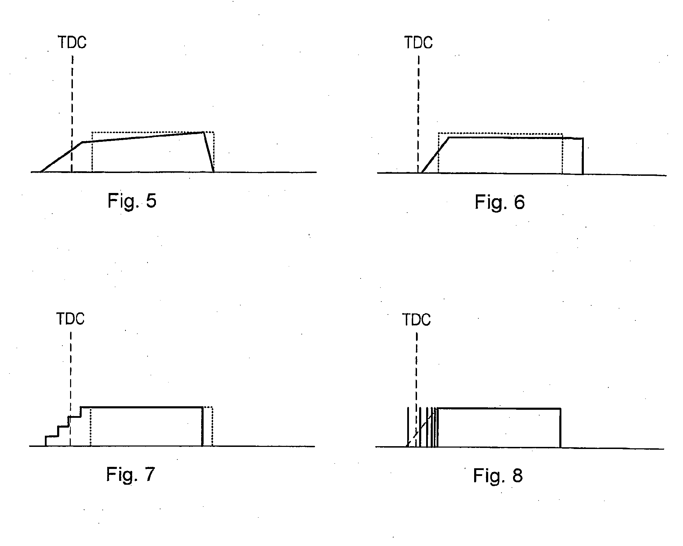

In figures 5 - 7 the traditional fuel injection is illustrated by the dotted curves. Fuel injection is initiated after the TDC and the injection rate is constant during the entire injection period.

In figure 5 the solid fuel injection curve shows that the fuel injection is initiated slightly before the TDC and increases gradually up to a knee, which is lower than the traditional level.

In figure 6 the fuel injection is initiated slightly after the TDC and increases gradually up to a knee. After the knee the fuel injection rate can be kept constant as in figure 6 or can be varied as in figure 5. The termination of the fuel injection is dependent on the engine load.

A stepwise variation of the injection pressure is illustrated in figure 7. This can be achieved using a fuel injection valve with a finite number of discrete positions resulting in a corresponding number of discrete injection pressures and corresponding injection rates. Or a number of on/off injection valves can be arranged to inject fuel into the same cylinder, where the injection valves can be individually controlled, and the valves can be activated sequentially to achieve a stepwise variation of the injection pressure. This can be an advantage in engines with very large cylinder diameters, where two or more individually controllable injection nozzles can be distributed across the cylinder top. The valves can be of the on/off type or stepwise or even continuously controllable.

The gradually increasing initial phase of the injection can also be obtained as in figure 8, where a fast reacting fuel injection valve is controlled to inject a series of small discrete injection pulses. The gradual increase in injection rate is obtained by decreasing the intervals between pulses (i.e. increasing their frequency) up to a time where the valve is kept open for the rest of the injection phase. The effect of initiating the injection by one or more small discrete injection pulses approximates that of a gradual opening of the injection valve as in figures 5 - 6, which is indicated by a dashed line in figure 8.

According to need the variation in fuel injection rate can be linear as shown or non-linear both in the initial phase and in the remaining of the injection phase, and the above embodiments can be varied and combined.

A variation in the compression pressure p_{comp} can be achieved by varying the time of closing the exhaust valve. An early closure of the exhaust valve results in a higher compression pressure, and a later closure of the exhaust valve results in a lower compression pressure. This method mainly results in an overall reduction of the cylinder pressure and hence in the corresponding vibrations and can be used in combination with gradually increasing the fuel injection rate.

## Claims

1. A method of operating a large piston engine (10) of the crosshead type, in particular a two-stroke engine having at least one cylinder (16), a controlled fuel injection system and a controlled exhaust system, the method comprising
- shaping the initial phase of the fuel injection profile by controlling the opening of the fuel injection valve or valves by controlling the fuel injection pressure or the fuel injection rate and controlling the closing of the exhaust valve to control predetermined frequencies of the cylinder pressure by performing a frequency analysis of the cylinder pressure component at each frequency and controlling that predetermined frequencies in the frequency spectrum of the cylinder pressure are within predefined limits.

2. A method according to claim 1 further comprising
- controlling the fuel injection system to initiate fuel injection by gradually increasing the fuel injection rate.

3. A method according to claim 2 wherein the fuel injection rate is increased continuously.

4. A method according to claim 2 wherein the fuel injection rate is increased stepwise.

5. A method according to claim 2 wherein the fuel injection rate is increased by injecting one or more discrete injections.

6. A method according to any one of claims 1-5 wherein the cylinder pressure is controlled by controlling the closure of the exhaust valve.

7. A method according to any one of claims 1-6 wherein the predetermined frequencies are selected from the group of frequencies consisting of the engine shaft rotation frequency and multiples thereof.

8. A method according to any one of claims 1-7, the engine having at least two selectable modes of operation (A, B) each including operating parameters and operating conditions optimised for achieving a particular performance over a range of engine speeds (n), and where each mode of operation (A, B) results in an engine speed dependent vibratory stress (τ) level in an engine component (12) or in a component (13, 14, 15) of an installation (11) excited by the engine,
the method comprising
- operating the engine in a selected first one (A) of the modes of operation,
- determining, at each engine speed (n), a vibratory stress level (τ) in the engine component or in the component of the installation excited by the engine,
- comparing the determined vibratory stress level (τ) to a predetermined vibratory stress level limit (τ₁, τ₂), and, if the determined vibratory stress level exceeds the predetermined vibratory stress level limit,
- modifying one or more operating parameters of the selected mode of operation or changing to a second mode of operation (A1, A2, B, B1), to reduce the vibratory stress level (τ).

9. A method according to claim 8 further comprising, when operating the engine with the modified operating parameters or in the second mode of operation (A1, A2, B, B1),
- determining, at each engine speed (n), the calculated hypothetical vibratory stress level (τ) that would exist in the engine component or in the component of the installation excited by the engine, if the engine were operated in the first mode of operation (A),
- comparing the hypothetical vibratory stress level (τ) to the predetermined vibratory stress level limit (τ₁, τ₂), and, if the hypothetical vibratory stress level does not exceed the predetermined vibratory stress level limit,
- operating the engine in the first mode of operation (A).

10. A large piston engine (10) of the crosshead type, in particular a two-stroke engine having at least one cylinder (16), a controlled fuel injection system and a controlled exhaust system, the engine being configured to operate according to the method of any one of claims 1-9.

## Patentansprüche

1. Verfahren zum Betrieb eines großen Kolbenmotors (10) des Kreuzkopftyps, insbesondere eines Zweitaktmotors mit zumindest einem Zylinder (16), einem gesteuerten Kraftstoffeinspritzsystem und einem gesteuerten Abgassystem, welches Verfahren umfasst
- Gestaltung der Anfangsphase des Kraftstoffeinspritzprofils durch Steuerung des Öffnens des Kraftstoffeinspritzventils oder der -ventile durch Steuerung des Kraftstoffeinspritzdrucks oder der Kraftstoffeinspritzmenge und Steuerung des Schließens des Abgasventils zur Steuerung von vorbestimmten Frequenzen des Zylinderdrucks durch Ausführen einer Frequenzanalyse der Zylinderdruckkomponente bei jeder Frequenz und Überprüfen, dass vorbestimmte Frequenzen im Frequenzspektrum des Zylinderdrucks innerhalb vorgegebener Grenzen liegen.

2. Verfahren nach Anspruch 1 zusätzlich umfassend
- die Steuerung des Kraftstoffeinspritzsystems zum Einleiten der Kraftstoffeinspritzung durch stufenweises Erhöhen der Kraftstoffeinspritzmenge.

3. Verfahren nach Anspruch 2, wobei die Kraftstoffeinspritzmenge kontinuierlich erhöht wird.

4. Verfahren nach Anspruch 2, wobei die Kraftstoffeinspritzmenge schrittweise erhöht wird.

5. Verfahren nach Anspruch 2, wobei die Kraftstoffeinspritzmenge durch Injizieren einer oder mehrerer diskreter Einspritzungen erhöht wird.

6. Verfahren nach einem der Ansprüche 1-5, wobei der Zylinderdruck durch Steuerung des Schließens des Abgasventils gesteuert wird.

7. Verfahren nach einem der Ansprüche 1-6, wobei die vorbestimmten Frequenzen aus der Gruppe von Frequenzen ausgewählt werden, bestehend aus der Motorwellendrehungsfrequenz und Vielfachen davon.

8. Verfahren nach einem der Ansprüche 1-7, wobei der Motor zumindest zwei auswählbare Betriebsarten (A, B) aufweist, wobei jede Betriebsparameter und Betriebsbedingungen umfasst, die für das Erreichen einer bestimmten Leistung in einem Bereich von Motordrehzahlen (n) optimiert sind, und wobei jede Betriebsart (A, B) zu einem motordrehzahlabhängigen Schwingungsbeanspruchungsniveau (τ) in einer Motorkomponente (12) oder in einer Komponente (13, 14, 15) einer Einrichtung (11), die vom Motor angeregt wird, führt,
welches Verfahren umfasst
- Betreiben des Motors in einer ausgewählten ersten (A) der Betriebsarten,
- Bestimmen bei jeder Motordrehzahl (n) eines Schwingungsbeanspruchungsniveaus (τ) in der Motorkomponente oder in der Komponente der Einrichtung, die vom Motor angeregt wird,
- Vergleichen des bestimmten Schwingungsbeanspruchungsniveaus (τ) zu einer vorbestimmten Schwingungsbeanspruchungsniveaubegrenzung (τ₁, (τ₂), und, falls das vorbestimmte Schwingungsbeanspruchungsniveau die vorbestimmte Schwingungsbeanspruchungsniveaubegrenzung überschreitet,
- Modifizierung eines oder mehrerer Betriebsparameter der ausgewählten Betriebsart oder Wechseln in eine zweite Betriebsart (A1, A2, B, B1) zur Verringerung des Schwingungsbeanspruchungsniveaus (τ).

9. Verfahren nach Anspruch 8, zusätzlich umfassend, wenn der Motor mit den modifizierten Betriebsparametern oder in der zweiten Betriebsart (A1, A2, B, B1) betrieben wird,
- Bestimmen bei jeder Motordrehzahl (n) des berechneten hypothetischen Schwingungsbeanspruchungsniveaus (τ), das in der Motorkomponente oder in der Komponente der Einrichtung, die vom Motor angeregt wird, vorhanden wäre, falls der Motor in der ersten Betriebsart (A) betrieben würde,
- Vergleichen des hypothetischen Schwingungsbeanspruchungsniveaus (τ) zur vorbestimmten Schwingungsbeanspruchungsniveaubegrenzung (τ₁, τ₂), und, falls das hypothetische Schwingungsbeanspruchungsniveau die vorbestimmte Schwingungsbeanspruchungsniveaubegrenzung nicht überschreitet,
- Betreiben des Motors in der ersten Betriebsart (A).

10. Großer Kolbenmotor (10) des Kreuzkopftyps, insbesondere ein Zweitaktmotor mit zumindest einem Zylinder (16), einem gesteuerten Kraftstoffeinspritzsystem und einem gesteuerten Abgassystem, welcher Motor zum Betrieb gemäß dem Verfahren nach einem der Ansprüche 1-9 ausgebildet ist.

## Revendications

1. Procédé de faire fonctionner un moteur à piston de grande taille (10) du type à crosse, en particulier un moteur à deux temps ayant au moins un cylindre (16), un système contrôlé d'injection de carburant et un système contrôlé d'échappement, ledit procédé comprenant
- la mise en forme de la phase initiale du profil d'injection de carburant par la commande de la soupape ou des soupapes d'injection de carburant par la commande de la pression d'injection de carburant ou du taux d'injection de carburant et la commande de la fermeture de la soupape d'échappement pour commander des fréquences prédéterminées de la pression du cylindre en exécutant une analyse de fréquence d'un composant de pression de cylindre à chaque fréquence et le contrôle des fréquences prédéterminées dans le spectre de fréquences de la pression de cylindre étant dans des limites prédéfinies.

2. Procédé selon la revendication 1, comprenant en outre
- la commande du système d'injection de carburant pour initier l'injection de carburant par une augmentation progressive du taux d'injection de carburant.

3. Procédé selon la revendication 2, dans lequel le taux d'injection de carburant est augmenté progressivement.

4. Procédé selon la revendication 2, dans lequel le taux d'injection de carburant est augmenté par étapes.

5. Procédé selon la revendication 2, dans lequel le taux d'injection de carburant est augmenté en injectant une ou plusieurs injections discrètes.

6. Procédé selon l'une quelconque des revendications 1 à 5, dans lequel la pression de cylindre est contrôlée par la commande de la fermeture de la soupape d'échappement.

7. Procédé selon l'une quelconque des revendications 1 à 6, dans lequel les fréquences prédéterminées sont sélectionnées parmi le groupe de fréquences composé par la fréquence de rotation d'arbre de moteur et des multiples de celle-ci.

8. Procédé selon l'une quelconque des revendications 1 à 7, le moteur ayant au moins deux modes de fonctionnement sélectionnables (A, B), chacun comprenant des paramètres de fonctionnement et des conditions de fonctionnement optimisés pour obtenir une performance particulière sur une gamme de vitesses de moteur (n), et chaque mode de fonctionnement (A, B) ayant pour résultat un niveau de contrainte vibratoire dépendante de vitesse de moteur (τ) dans un composant de moteur (12) ou dans un composant (13, 14, 15) d'une installation (11) excitée par le moteur,
ledit procédé comprenant
- le fonctionnement du moteur dans un premier mode (A) sélectionnés des modes de fonctionnement,
- la détermination, à chaque vitesse de moteur (n), d'un niveau de contrainte vibratoire (τ) dans le composant de l'installation ou dans le composant de l'installation excitée par le moteur,
- la comparaison du niveau de contrainte vibratoire déterminé (τ) à une limite de niveau de contrainte vibratoire prédéterminée (τ₁, τ₂), et, si le niveau de contrainte vibratoire déterminé est supérieur à la limite de niveau de contrainte vibratoire prédéterminée,
- la modification d'un ou de plusieurs paramètres de fonctionnement du mode sélectionné de fonctionnement ou le changement à un deuxième mode de fonctionnement (A1, A2, B, B1), pour réduire le niveau de contrainte vibratoire (τ).

9. Procédé selon la revendication 8, comprenant en outre, lors du fonctionnement du moteur avec les paramètres de fonctionnement modifiés ou dans le deuxième mode de fonctionnement (A1, A2, B, B1),
- la détermination, à chaque vitesse de moteur (n), du niveau de contrainte vibratoire hypothétique calculé (τ) qui existerait dans le composant de moteur ou dans le composant de l'installation excitée par le moteur, si le moteur était entraîné dans le premier mode de fonctionnement (A),
- la comparaison du niveau de contrainte vibratoire hypothétique (τ) à la limite de niveau de contrainte vibratoire prédéterminée (τ₁, τ₂), et, si le niveau de contrainte vibratoire hypothétique n'est pas supérieur à la limite de niveau de contrainte vibratoire prédéterminée,
- le fonctionnement du moteur dans un premier mode (A).

10. Moteur à piston de grande taille (10) du type à crosse, en particulier un moteur à deux temps ayant au moins un cylindre (16), un système contrôlé d'injection de carburant et un système contrôlé d'échappement, le moteur étant configuré de manière à fonctionner conformément au procédé selon l'une quelconque des revendications 1 à 9.
